# NEUE EUROPÄISCHE PATENTSCHRIFT

(11) **EP 0 736 826 B2**
(45) Veröffentlichungstag und Bekanntmachung des Hinweises auf die Entscheidung über den Einspruch: **27.07.2005**
(45) Hinweis auf die Patenterteilung: 24.11.1999
(21) Anmeldenummer: 96105401.2
(22) Anmeldetag: 04.04.1996
(51) Int. Cl.: G05D 23/20, G05D 23/19

(54) **Temperaturgeführte Leistungsansteuerung für elektrisch betriebene Pumpenaggregate**
Temperature responsive power control for an electric pump unit
Commande de puissance en fonction de la température pour un groupe de pompe électrique

(30) Priorität: 08.04.1995 DE 19513394
(43) Veröffentlichungstag der Anmeldung: 09.10.1996
(73) Patentinhaber: WILO GmbH, D-44263 Dortmund (DE)
(72) Erfinder: Greitzke, Stephan, Dr., 44287 Dortmund (DE); Kettner, Thorsten, Dr., 45659 Recklinghausen (DE); Albers Frank, 58239 Schwerte (DE)
(74) Vertreter: COHAUSZ DAWIDOWICZ HANNIG & PARTNER

(56) Entgegenhaltungen:
- EP-A- 0 726 396
- EP-B- 0 019 743
- EP-B- 0 336 255
- DE-A- 3 310 214
- DE-A- 4 118 799
- DE-A- 4 239 929
- GB-A- 2 068 601
- US-A- 5 224 352
- HLH Heizung Lüftung / Klima Haustechnik, Band 44, 1993, Nr. 11, Nov., Seiten 654 - 657
- GRASSMANN HUGO: 'Regelungstechnik; ein praxisorientiertes Lehrbuch', Seiten 229 - 232; Verl. Harri Deutsch, 1997; ISBN 3-8171-1520-2
- TIETZE U.; SCHENK C.: 'Halbleiterschaltungstechnik', Seite 311; 8. Aufl., Springer Verl., ISBN 0-387-16720-X

## Beschreibung

### Beschreibung für folgende Vertragsstaaten: DE, FR, GB, IT

Die Erfindung betrifft eine temperaturabhängig geführte Leistungssteuerung für ein elektrisch betriebenes Pumpenaggregat, das mit mindestens zwei verschiedenen Leistungsstufen betreibbar ist.

Bei ungeregelten Pumpenaggregaten lassen sich die Leistungsstufen, die einer Drehzahl entsprechen, in wenigen definierten Stufen auswählen. Die Drehzahl wird durch einen Schalter an Klemmenkasten der Pumpe vom Heizungsmonteur eingestellt. Sie ändert sich bei Variation der Durchflußmenge Q. Damit variiert auch die Förderhöhe H der Pumpe entsprechend der individuellen Pumpenkennlinie im H-Q-Diagramm. Dabei führt die Änderung der Förderhöhe mitunter zu unerwünschten Druckschwankungen im Heizungssystem, die Geräuschprobleme mitsichbringen können.

Um beim Einsatz ungeregelter Pumpenaggregate Energie zu sparen, ist es bekannt, ihre Förderhöhe H_{hoch} über eine Zeitschaltuhr mit der Nachtabsenkung der Kesseltemperatur zu synchronisieren. Während der Nachtabsenkung schaltet das Zeitmodul die Leistung der Pumpe aus bzw. auf die geringere Förderhöhe H_{niedrig}, die am Tage wieder auf H_{hoch} zurückgesetzt wird.

Der Nachteil einer solchen externen Schaltuhr liegt in der erforderlichen Synchronisation zwischen der Kessel- und der Pumpenschaltuhr. Die erforderlichen Justierungen der beiden Zeitschaltuhren, wie sie beispielsweise beim Wechsel von Sommer- zu Winterzeit nötig sind, sind sehr unkomfortabel.

Es kommt leicht zu Fehleinstellungen, die zu einer Unter- bzw. Überversorgung des Heizungssystems führen.

Bei ungeregelten Pumpenaggregaten ist desweiteren bekannt, die Vorlauftemperatur der Heizungsanlage durch Temperaturfühler aufzunehmen und die Förderhöhe H_{hoch} bei Unterschreiten einer definierten Wassertemperatur auf H_{niedrig} zu senken. Bei Überschreiten der voreingestellten Temperatur schaltet die Pumpe automatisch auf die Förderhöhe H_{hoch} zurück.

Das Umschalten der Förderhöhe in Abhängigkeit einer definierten absoluten Temperatur hat folgende Nachteile: Das Temperaturverhalten der Heizungsanlage muß genau bekannt sein, damit eine Temperaturschwelle eingestellt werden kann. Heizungssysteme weisen im allgemeinen eine witterungsgeführte gleitende Temperaturregelung auf. Die Variationen des Heizverhaltens einer Anlage im Winter- bzw. Übergangsbetrieb und andere Schwankungen des Systems werden bei absoluten Schalttemperaturen nicht berücksichtigt. Außerdem führt der einfache Umschaltmechanismus in einem Heizungssystem mit Zweipunkt- oder anderen einfachen Reglem, bei denen auch im Tagbetrieb die Vorlauftemperatur stark schwankt, zum unerwünschten ständigen Umschalten der Pumpe zwischen den voreingestellten Betriebspunkten. Eine Fehleinstellung der Umschalttemperatur kann im Extremfall dazu führen, daß die Pumpe entweder nie in die Nachtabsenkung oder nie in den Tagbetrieb schaltet und somit die gewünschte Funktion nicht erftillt.

Ein grundsätzliches Problem liegt in der Schwierigkeit, absolute Temperaturen genau zu messen. Dazu bedarf es geeichter Temperaturfühler, die über lange Zeit reproduzierbar arbeiten. Solche Temperaturfühler sind teuer und aufwendig.

Neben den genannten sind außerdem Pumpenaggregate bekannt, die eine integrierte Druckregelung enthalten, wobei die vorgegebene Druckkennlinie verschiedene Verläufe wie beispielsweise Δp = konstant oder Δp = variabel aufweisen kann.

Im Vergleich zu den ungeregelten Pumpen gewährleisten die genannten Regelungen eine definierte Förderhöhe bei wechselnden Anforderungen an den Heizungswasserdurchsatz. Die Förderhöhe kann bei geregelten Pumpen von vomherein auf ein Minimum eingestellt werden, ohne daß es bei erhöhtem Heizungsbedarf zu einem Leistungseinbruch kommt. Die Förderhöhe ist damit stets optimal an das Heizungssystem angepaßt und eine möglichst hohe Energieersparnis ist gewährleistet. Gleichzeitig werden durch die Druckregelung eventuell auftretende Störgeräusche in den Leitungen und Thermostatventilen reduziert.

Bei der Nachtabsenkung der Kesseltemperatur öffnen die Heizkörperthermostate des Heizungssystems, um die geforderte Raumtemperatur einzustellen. Um den daraus resultierenden erhöhten Mengenbedarf zu decken, reagiert eine geregelte Pumpe mit einer Leistungserhöhung, in extremen Fällen sogar bis an die maximale Leistungsstellgrenze. Solche geregelten Pumpen reagieren also gerade falsch auf die Nachtabsenkung der Kesseltemperatur. Um Energie zu sparen, ist demnach gerade bei geregelten Pumpen eine automatische Anpassung der Pumpenleistung an die Nachtabsenkung wünschenswert.

Die Aufgabe der Erfindung ist es, eine temperaturgeführte Leistungsansteuerung zu schaffen, die kostengünstig und wartungsfreundlich ist und eine energiesparende Leistungsanpassung von Pumpenaggregaten an die gegebenen Bedingungen, d.h. an die veränderliche Heizkesseltemperatur oder an Spitzenlastzeiten, gewährleistet.

Diese Aufgabe wird erfindungsgemäß nach dem kennzeichnenden Teil des Anspruchs 1 gelöst.

Ein Vorteil dieser Leistungsansteuerung ist, daß sie im Wesentlichen mit Temperaturunterschieden also mit relativen Temperaturen arbeitet und die Schaltpunkte anhand von Temperaturverläufen festlegt. Falls Messungen absoluter Temperaturen nötig sind, müssen diese nicht sonderlich genau sein. Für die Messung der Temperaturen können deshalb die einfachsten und billigsten Temperaturfühler verwendet werden, was sich vorteilhaft auf den Verkaufspreis der Pumpenaggregate auswirkt. Die Temperaturfühler (Temperatursensoren) werden vorteilhafterweise schon bei der Fertigung in oder am Pumpenaggregat insbesondere im Gehäuse angebracht, so daß eine gesonderte Montage entfällt.

Dadurch, daß die Pumpe mit der erfindungsgemäßen Kontrolleinheit die Heizkesseltemperatur über den Temperaturverlauf eigenständig verfolgt und die Pumpenleistung auf eine Nachtabsenkung oder eine Sommer/Winter-Umstellung der Heizkesseltemperatur einrichtet, ist eine optimale Energieerspamis gegeben. Fehlschaltungen durch falsche Synchronisation manuell einstellbarer Funktionsmodule sind ausgeschlossen. Die Anpassung der Leistungsstufe der Pumpe erfolgt dabei vorteilhafterweise über eine Leistungssteuerung mit einer Regeleinheit, der eine Leistungsstufe als Regelgröße vorgebbar ist. In einer besonderen Ausführungsform der Erfindung ist die Kontrolleinheit mit einem Prozeßrechner ausgestattet, in den ein Steuerprogramm implementiert ist. Das Programm wird schon bei der Herstellung des Pumpenaggregates in den Speicher des Prozeßrechners geladen. Der Speicher ist vorteilhafterweise ein ROM (read only memory), auf das die Information unveräderbar aufgebracht ist.

In einer besonderen Ausführung weist das Steuerprogramm selbstlemende Algorithmen auf, die unscharf definierte (linguistische) Variablen, insbesondere vorgegebene Schalttemperaturen, während eines Lemprozesses den Bedingungen der Heizungsanlage spezifisch anpassen.

In einer anderen Ausführungsform bedient sich das Steuerprogramm unscharf definierter Schaltkriterien. Eine derartige "fuzzy" Logik befähigt das Pumpenaggregat, den Betriebszustand der Heizungsanlage wie eine Nachtabsenkung oder einen Winterbetrieb selbständig zu erkennen und eine "angepaßte" Leistungsstufe der Pumpe auszuwählen.

Ein mit einem solchen Steuerprogramm bestücktes Pumpenaggregat reagiert autark auf die Nachtabsenkung der Kesseltemperatur oder die Sommer/Winter-Umstellung. Die Umstellung braucht daher nicht durch den Heizungsmonteur zu erfolgen. Damit ist das Pumpenaggregat wartungsarm und kostengünstig im Betrieb. Bei dem erfindungsgemäßen Pumpenaggregat ist die Wahrscheinlichkeit für das Auftreten von Störgeräuschen in den Leitungen im Verhältnis zu gewöhnlichen geregelten Pumpenaggregaten reduziert. Fehleinstellungen des Pumpenaggregates, die eine Unter- oder Überversorgung des Heizungssystems zur Folge haben, werden vermieden. Der Einsatz einer solchen intelligenten Pumpensteuerung bringt damit eine erhebliche Energieerspamis mit sich.

Außerdem ist es vorteilhaft, daß die Regelung so ausgeführt werden kann, daß eine kontinuierliche Sollwertvorgabe zwischen der möglichen minimalen bzw. der maximalen Pumpenleistung ermöglicht wird. Dadurch kann zu Spitzenlastzeiten eine Erhöhung der Pumpenleistung über die zuvor eingestellte Förderhöhe H_{hoch} hinaus erfolgen.

Durch die flexible Anpassung der Leistungsstufe an den Temperaturverlauf ist es möglich, die Temperaturmessung an beliebiger Stelle im Heizungssystem vorzunehmen. Da lediglich relative Temperaturen gemessen werden, ist die Messung nicht mehr wie bisher auf den Vorlauf beschränkt. Um weitere Kontrollkriterien zu haben ist es vorteilhaft, wenn die Kontrolleinheit neben der Temperatur außerdem die Stromaufnahme des Elektromotors oder den Differenzdruck vor und hinter dem Pumpenaggregat registriert und in dem Steuerprogramm verarbeitet. Dadurch ist es auf einfache Weise möglich, den Faktor der Selbsterwärmung des Motors durch stärkere Belastung zu berücksichtigen.

Eine besondere Ausführung der Leistungsansteuerung erkennt darüber hinaus, ob neben der genannten Nachtabsenkung oder Winterumstellung andere Betriebsfälle des Heizungssystems vorliegen, wie beispielsweise eine Niedertemperatur- oder eine Fußbodenheizung. Sie erkennt außerdem, ob das Pumpenaggregat im Vor- oder Rücklauf des Heizungssystems montiert ist, oder ob es sich gerade um eine Spitzenlastzeit handelt, während derer die Förderhöhe eventuell über die vorgegebene Höhe H_{hoch} heraufgesetzt werden muß.

Ein Ausführungsbeispiel der Erfindung und die Funktionsweise ist anhand der Zeichnungen dargestellt und wird im folgenden näher beschrieben.
Es zeigen
- Fig.1: ein Schema eines Heizungskreislaufes
- Fig.2: einen typischen Temperaturverlauf
- Fig.3: einen Verlauf der Parameter des Fallzeitkriteriums
- Fig.4: das Ausgangsverhalten bei einer klassischen Therme.

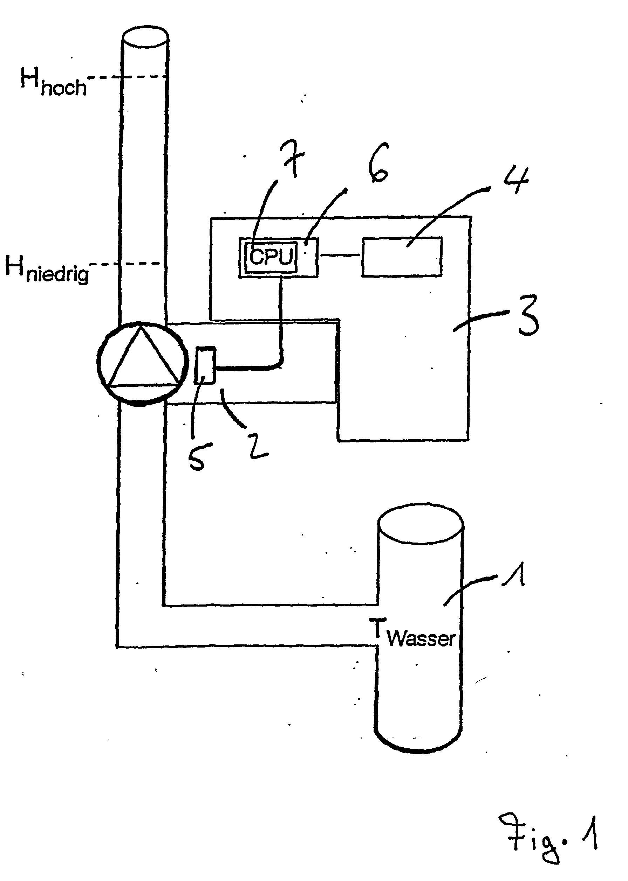

Das Heizungssystem wird nach Figur 1 von dem Heizkessel 1 mit Wasser der Temperatur T_{Wasser} versorgt. Im Rohrleitungssystem ist ein Pumpenaggregat 2 mit einer Leistungsansteuerung 3 eingebaut, der verschiedene Leistungsstufen und damit verschiedene Förderhöhen H_{hoch} und H_{niedrig} vorgebbar sind.

In dem besonderen Ausführungsbeispiel ist ein geregeltes Pumpenaggregat 2 verwendet, d.h. ein Pumpenaggregat, dessen Leistungsansteuerung 3 eine Regeleinheit 4 aufweist. Einem solchen geregelten Pumpenaggregat 2 ist die Leistungsstufe als Regelgröße vorgebbar. Diese Leistungsstufe wird der Regeleinheit 4 durch eine Kontrolleinheit 6 vorgegeben.

Im Heizungssystem ist ein Temperatursensor 5 möglichst nahe dem Pumpenaggregat 2 bzw dem Heizwasserrohr angebracht. In dem Ausführungsbeispiel ist der Temperatursensor 5 in das Gehäuse der Pumpe 2 eingebracht. In einer anderen Ausführugsform wird die Temperatur des Heizungssystems über eine beliebige Kommunikationsschnittstelle, beispielsweise von einem im Raum angebrachten Infrarotsensor an eine Infrarotschnittstelle der Kontrolleinheit 6 gesendet.

Die Kontrolleinheit 6, der die Temperatur vom Temperatursensor 5 zugeführt wird, beinhaltet eine Elektronik, die den Verlauf der Temperatur über einen längeren Zeitraum registriert und auswertet. Die Kontrolleinheit 6 ist mit einem Prozeßrechner 7 ausgestattet, in dessen Speicher ein Programm implementiert ist und der einen Analogeingang für das Signal des Temperatursensors 5 aufweist. Stellt die Kontrolleinheit 6 mittels eines noch zu beschreibenden Formalismus fest, daß es sich bei einer Temperaturänderung nicht nur um eine kurzfristige Schwankung, sondern um eine Umstellung der Kesseltemperatur handelt, gibt sie der Leistungsansteuerung eine veränderte Leistungsstufe als neue Regelgröße vor.

Die Vorgabe einer veränderten Leistungsstufe geschieht infolgedessen aufgrund der Änderung der Temperatur relativ zu einer Anfangstemperatur. Es ist daher nicht mehr nötig, absolute Temperaturen zu messen, um sie mit absoluten Schaltwerten zu vergleichen. Das System stellt sich automatisch auf veränderliche Situationen, insbesondere auf eine Nachtabsenkung oder eine Sommer/Winter-Umstellung ein. Die Definition absoluter Schalttemperaturen wird hinfällig. Die Vorgabe der Leistungsstufe des Pumpenaggregates 2 geschieht damit in Abhängigkeit von der zeitlichen Änderung der Temperatur T_{Wasser} In der zu beschreibenden Ausführungsform der Erfindung ist es jedoch möglich, gemessene absolute Temperaturen als weiteres Bewertungskriterium in den Algorithmus miteinzubeziehen um eine bessere Anpassung an beliebige Heizungssysteme zu gewährleisten.

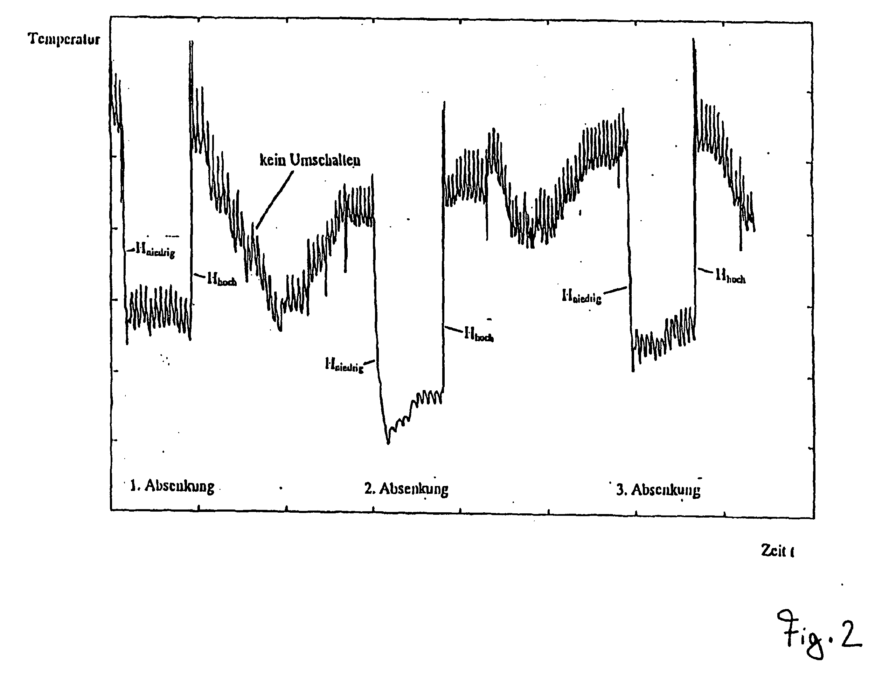

Die Funktionsweise der Leistungsansteuerung ist in dem Temperatur-Zeit-Diagramm in Figur 2 dargestellt. Es handelt sich dabei um die Aufzeichnung eines realen Temperaturverlaufes der im Vorlauf eines Heizungssystem gemessen wurde. Auf der horizontalen Achse ist die Zeit und auf der vertikalen Achse die Temperatur aufgetragen. Die Teilstriche an der vertikalen Achse markieren Abstände von 5°C.

Der Temperaturverlauf beginnt bei einer relativ hohen Antangstemperatur. Nach kurzer Zeit erfolgt die erste Absenkung der Kessettemperatur, wie an dem starken Temperatursturz zu erkennen ist. An der mit H_{niedrig} markierten Stelle schaltet die Leistungssteuerung die Pumpe auf eine geringere Leistung.

Nach der Phase der Absenkung erhöht der Brenner die Kesseltemperatur. Die Leistungsansteuerung erkennt den markanten Anstieg und reagiert mit der Erhöhung der Pumpenleistung entsprechend der mit H_{hoch} gekennzeichneten Leistung. Aufgrund der speziellen Charakteristik des Temperaturanstieges erkennt die Leistungsansteuerung das Ende der Absenkung schon bevor die Temperatur den Wert erreicht hat, bei der zuvor die Pumpenleistung reduziert wurde.

Nachdem die Kesseltemperatur ihr Maximum erreicht hatte, wurde ein langsamer Temperaturabfall registriert. Dieser Abfall deutet darauf hin, daß sich die Thermostaten an den Heizkörpern schlossen und nur noch eine geringe Menge heißen Wassers gebraucht wurde. Ein solcher Effekt läßt sich beispielsweise durch Sonneneintrahlung erklären. Obwohl die Temperatur die vorher markierte Schwelle unterschreitet, erkennt die Leistungsansteuerung aufgrund der Charakteristik des Verlaufes, daß es sich nicht um eine dauerhafte Senkung der Kesseltemperatur handelt und ändert die Pumpenleistung nicht. Es erfolgt kein Umschalten.

Erst bei der nächsten tatsächlichen Absenkung wird die Pumpenleistung reduziert. Diesmal allerdings bei einer geringeren Temperatur als in der 1. Absenkphase.

In dem Temperaturverlauf sind deutlich die teilweise extremen kurzzeitigen Temperaturschwankungen zu erkennen, auf die die erfindungsgemäße Leistungsansteuerung nicht reagiert, auch wenn eine Schalttemperatur unterschritten wurde.

Ein ähnlicher Temperaturverlauf hätte an einer anderen Stelle des Heizungssystems, beispielsweise im Rücklauf aufgenommen werden können. Die Temperaturänderungen hätten dann bei anderen Absoluttemperaturen stattgefunden, die Leistungsansteuerung hätte aber auf eine ähnliche Weise reagiert.

Im folgenden ist der Formalismus für ein mögliches Steuerprogramm dargestellt. Es handelt sich um einen Fuzzy-Algorithmus mit zwei Eingangsgrößen und den drei Ausgangszuständen Tagbetrieb, Nachtbetrieb und Übergangsbetrieb.

Die erste Eingangsvariable ist die Temperatur an der Oberfläche des Motorgehäuses, die in fünf Bereiche - sehr klein, klein, mittel, hoch und sehr hoch - unterteilt ist. Die Zuweisung von Temperaturwerten zu diesen linguistischen Termen ergibt sich aus definierten Anfangswerten als Preset und dem spezifischen Systemverhalten, indem durch einen adaptiven Parameter a, der je nach Anlage einen Wert zwischen ca. 5 - 10°C hat, die Bereichsgrenzen optimiert werden. Dadurch kann beispielsweise der Temperaturbereich "sehr klein" zwischen 20°C und 25°C liegen. Entsprechend werden auch die Bereiche der übrigen Temperaturklassen adaptiert.

Die zweite Eingangsvariable ist die "Fallzeit". Sie mißt die Zeiträume in denen die Temperatur absinkt. Durch die Fallzeit werden Temperaturänderungen bewertet. Der Algorithmus, nach dem die Fallzeit bestimmt wird, arbeitet nach folgenden Regeln:
- Beim Wechsel von fallender auf ansteigende Temperatur wird eine Variable T_{hoch} angepaßt.
- Beim Wechsel von ansteigender auf fallende Temperatur wird eine Variable T_{niedrig} angepaßt.
- Bei fallender Temperatur wird die Fallzeit inkrementiert.
- Wenn bei steigender Temperatur eine Temperaturdifferenz überschritten wird, wird die Fallzeit zurückgesetzt.

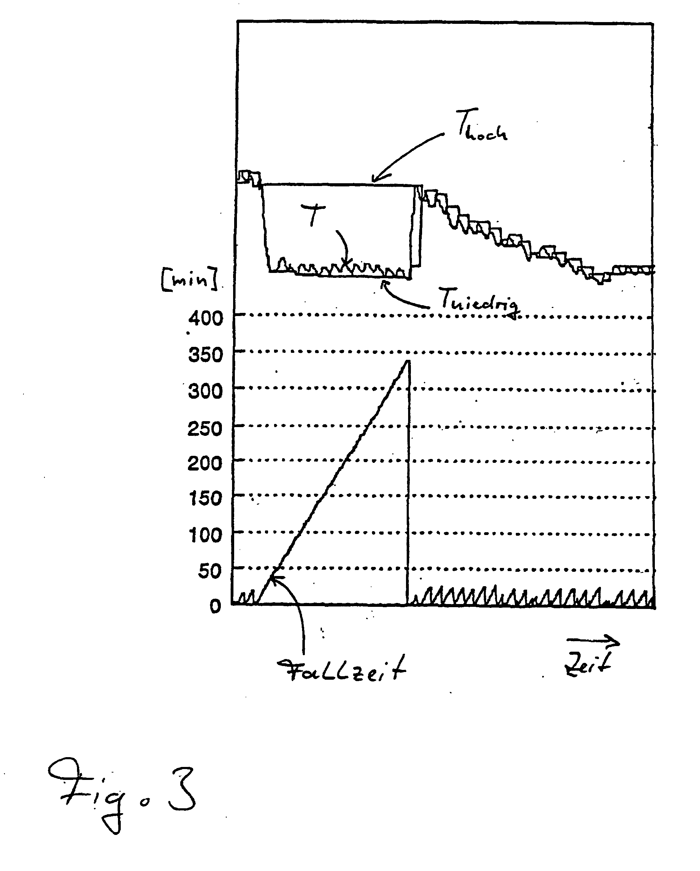

Die Fallzeit (in Minuten), d.h. die Zeitabschnitte nach denen die Temperatur gemessen wird, ist anhand typischer Zeitkonstanten festgelegt und in die drei Bereiche kurz, mittel und lang unterteilt. Der Verlauf der Fallzeit und von T_{hoch} und T_{niedrig} in Abhängigkeit von der gemessenen Temperatur ist in Figur 3 dargestellt. Die obere Kurve zeigt die gemessene Temperatur T, die von den adaptierten Temperaturen T_{hoch} und T_{niedrig} eingehüllt ist. Während der Nachtabsenkung der Temperatur T steigt die Fallzeit, bevor sie beim Anstieg der Temperatur T auf Null zurückgesetzt wird.

Mit T_{hoch} wird außerdem der Korrekturfaktor a für die Adaptierung nach a = (max(min(T_{hoch}-30,40°C), 20°C))/4 berechnet.

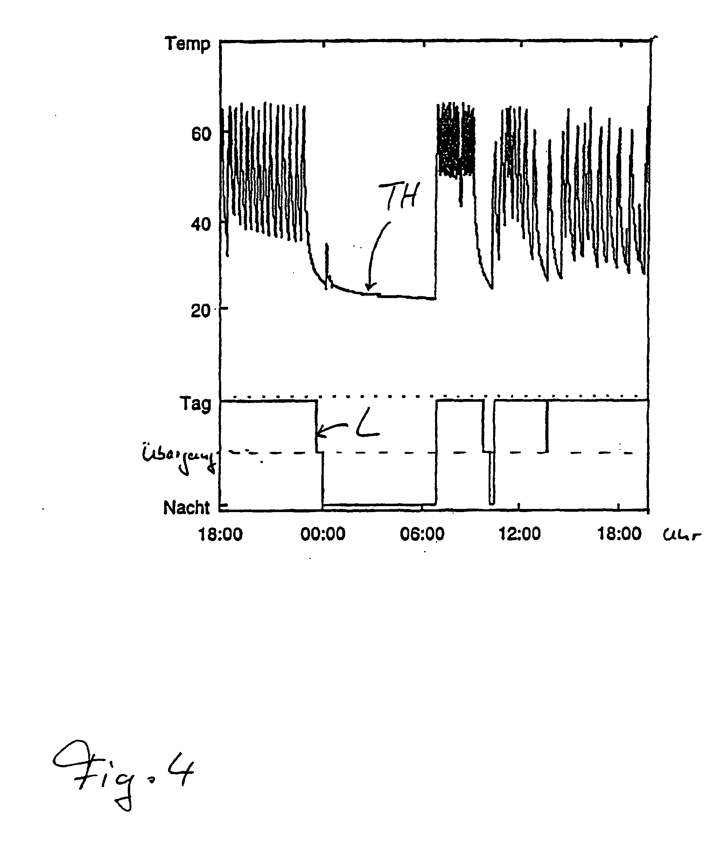

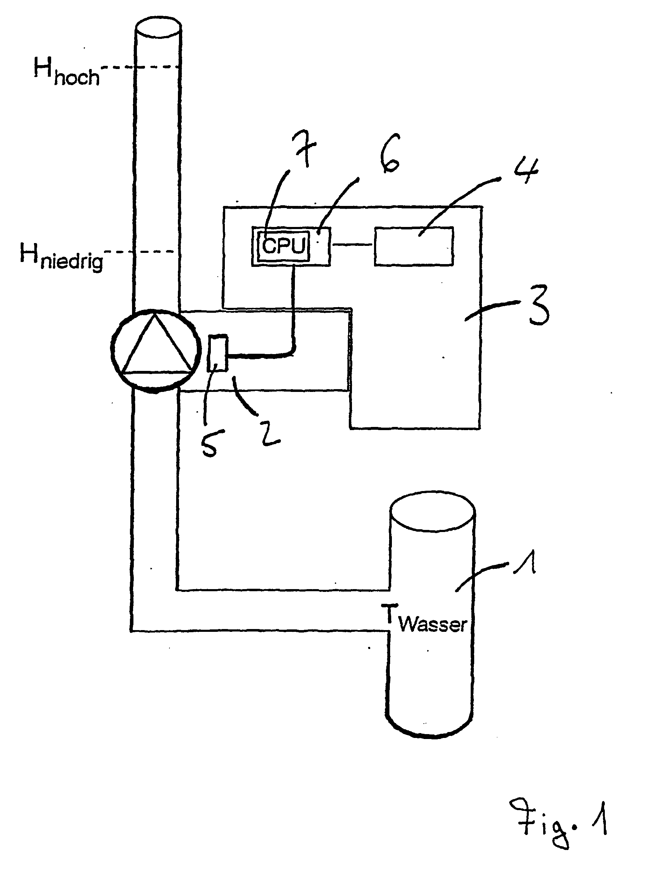

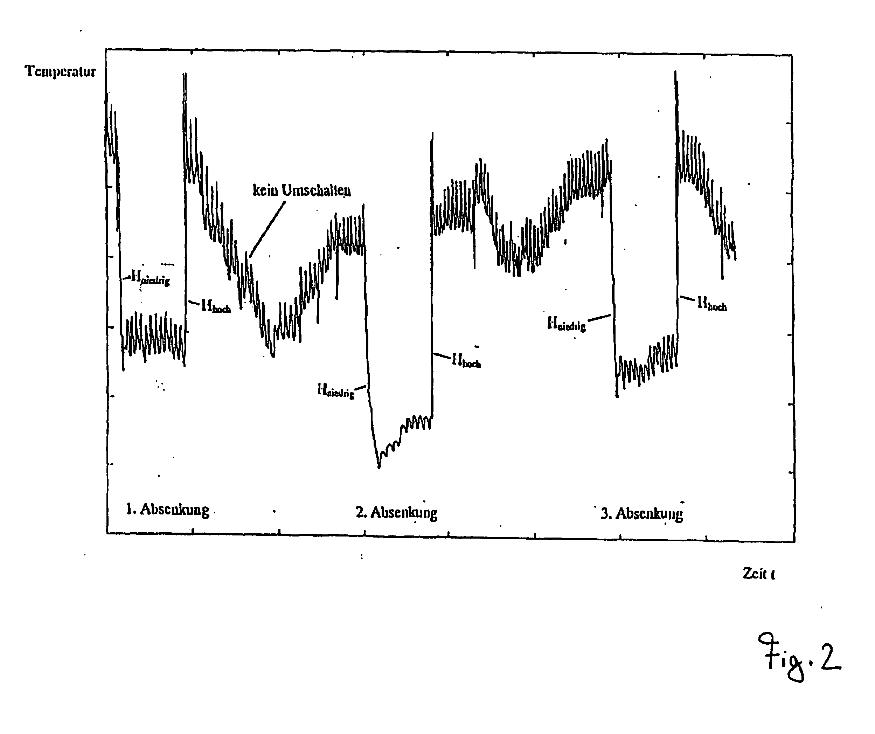

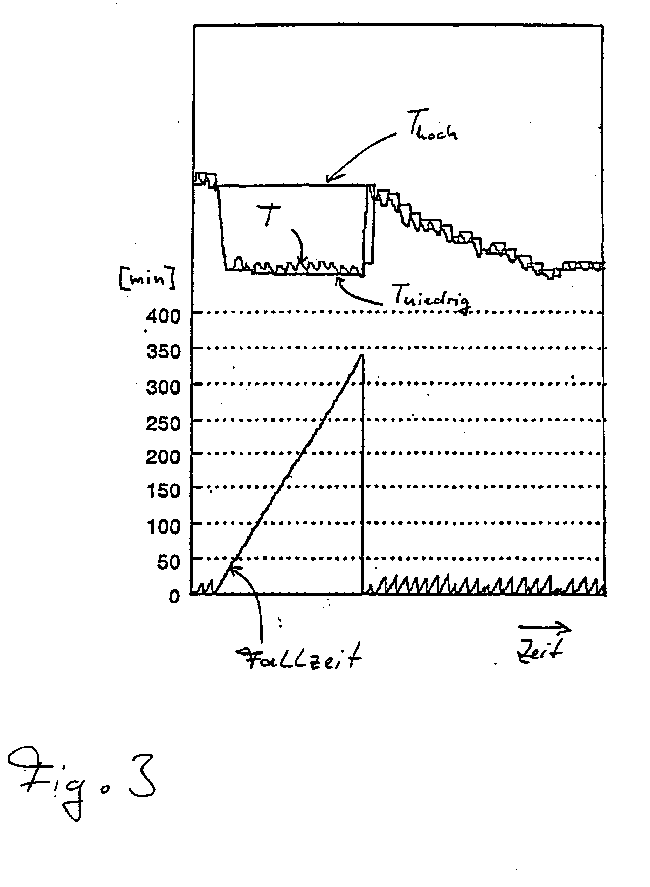

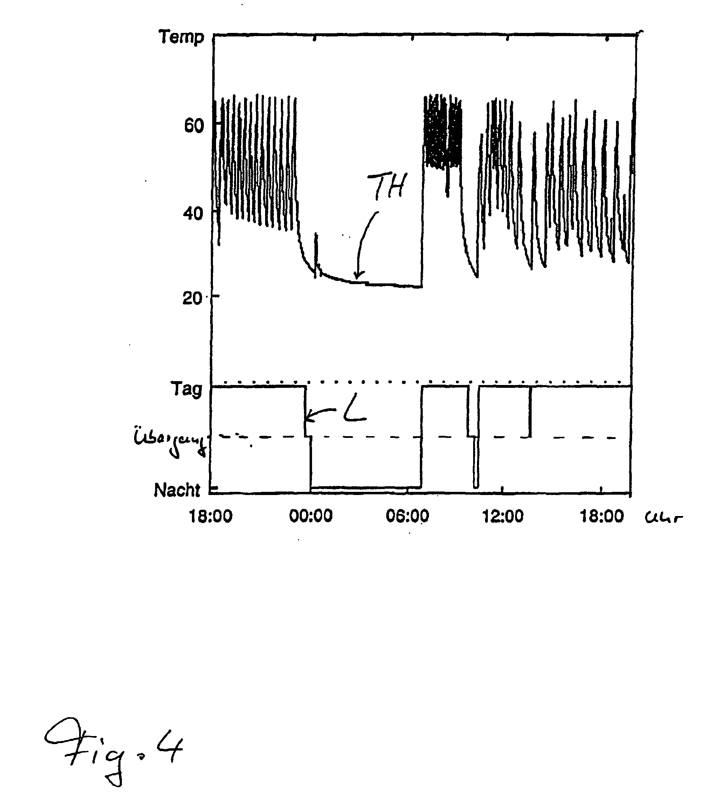

Die Regeln für das Fuzzy-System sind die folgenden:
- T = sehr hoch → Tag
- T = sehr klein → Nacht
- T = klein und Fallzeit = kurz → Übergang
- T = klein und Fallzeit = mittel → Übergang
- T = klein und Fallzeit = lang → Nacht
- T = mittel und Fallzeit = kurz → Tag
- T = mittel und Fallzeit = mittel → Übergang
- T = mittel und Fallzeit = lang → Nacht
- T = hoch und Fallzeit = kurz → Tag
- T = hoch und Fallzeit = mittel → Übergang
- T = hoch und Fallzeit = lang → Übergang
Mit den genannten Regeln wird eine Absenkung der Pumpenleistung erreicht, wie sie in Figur 4 dargestellt ist. Es handelt sich bei dem Temperaturverlauf um den einer Therme mit Raumtemperaturregelung. Die Heizkessellemperatur TH variiert zwischen ca. 20°C und 70°C. Der Bereich der Nachtabsenkung zwischen ca. 22 Uhr und 06 Uhr ist zu erkennen.

Wie die untere Kurve zeigt, ist der Algorithmus in der Lage, den Temperaturverlauf richtig zu deuten und die Pumpenleistung entsprechend der Gegebenheiten anzupassen und schaltet die Leistungsstufe L der Pumpe zwischen ca. 22 Uhr und 06 Uhr zurück. Die durch Brennerzyklen verursachten Temperaturschwankungen beeinflussen das Ausgangsverhalten dabei nicht. Die Temperaturschwankungen des Systems werden als solche erkannt und haben keine Auswirkungen auf die Pumpenleistung zur Folge. Gerade solche außerplanmäßigen Temperaturschwankungen führen bei herkömmlichen temperaturgeführten Regelungen zur Umstellung der Pumpenleistung, ohne daß ein Grund wie die Nachtabsenkung der Kesseltemperatur vorliegt.

### Beschreibung für folgenden Vertragsstaat: NL

Die Erfindung betrifft eine temperaturabhängig geführte Leistungssteuerung für ein elektrisch betriebenes Pumpenaggregat, das mit mindestens zwei verschiedenen Leistungsstufen betreibbar ist.

Bei ungeregelten Pumpenaggregaten lassen sich die Leistungsstufen, die einer Drehzahl entsprechen, in wenigen definierten Stufen auswählen. Die Drehzahl wird durch einen Schalter an Klemmenkasten der Pumpe vom Heizungsmonteur eingestellt. Sie ändert sich bei Variation der Durchflußmenge Q. Damit variiert auch die Förderhöhe H der Pumpe entsprechend der individuellen Pumpenkennlinie im H-Q-Diagramm. Dabei führt die Änderung der Förderhöhe mitunter zu unerwünschten Druckschwankungen im Heizungssystem, die Geräuschprobleme mitsichbringen können.

Um beim Einsatz ungeregelter Pumpenaggregate Energie zu sparen, ist es bekannt, ihre Förderhöhe H_{hoch} über eine Zeitschaltuhr mit der Nachtabsenkung der Kesseftemperatur zu synchronisieren. Während der Nachtabsenkung schaltet das Zeitmodul die Leistung der Pumpe aus bzw. auf die geringere Förderhöhe H_{niedrig}, die am Tage wieder auf H_{hoch} zurückgesetzt wird.

Der Nachteil einer solchen externen Schaltuhr liegt in der erforderlichen Synchronisation zwischen der Kessel- und der Pumpenschaltuhr. Die erforderlichen Justierungen der beiden Zeitschaltuhren, wie sie beispielsweise beim Wechsel von Sommer- zu Winterzeit nötig sind, sind sehr unkomfortabel.

Es kommt leicht zu Fehleinstellungen, die zu einer Unter- bzw. Überversorgung des Heizungssystems führen.

Bei ungeregelten Pumpenaggregaten ist desweiteren bekannt, die Vorlauftemperatur der Heizungsanlage durch Temperaturfühler aufzunehmen und die Förderhöhe H_{hoch} bei Unterschreiten einer definierten Wassertemperatur auf H_{niedrig} zu senken. Bei Überschreiten der voreingestellten Temperatur schaltet die Pumpe automatisch auf die Förderhöhe H_{hoch} zurück.

Das Umschalten der Förderhöhe in Abhängigkeit einer definierten absoluten Temperatur hat folgende Nachteile: Das Temperaturverhalten der Heizungsanlage muß genau bekannt sein, damit eine Temperaturschwelle eingestellt werden kann. Heizungssysteme weisen im allgemeinen eine witterungsgeführte gleitende Temperaturregelung auf. Die Variationen des Heizverhaltens einer Anlage im Winter- bzw. Übergangsbetrieb und andere Schwankungen des Systems werden bei absoluten Schalttemperaturen nicht berücksichtigt. Außerdem führt der einfache Umschaltmechanismus in einem Heizungssystem mit Zweipunkt- oder anderen einfachen Reglern, bei denen auch im Tagbetrieb die Vorlauftemperatur stark schwankt, zum unerwünschten ständigen Umschalten der Pumpe zwischen den voreingestellten Betriebspunkten. Eine Fehleinstellung der Umschalttemperatur kann im Extremfall dazu führen, daß die Pumpe entweder nie in die Nachtabsenkung oder nie in den Tagbetrieb schaltet und somit die gewünschte Funktion nicht erfüllt.

Ein grundsätzliches Problem liegt in der Schwierigkeit, absolute Temperaturen genau zu messen. Dazu bedarf es geeichter Temperaturfühler, die über lange Zeit reproduzierbar arbeiten. Solche Temperaturfühler sind teuer und aufwendig.

Neben den genannten sind außerdem Pumpenaggregate bekannt, die eine integrierte Druckregelung enthalten, wobei die vorgegebene Druckkennlinie verschiedene Verläufe wie beispielsweise Δp = konstant oder Δp = variabel aufweisen kann.

Im Vergleich zu den ungeregelten Pumpen gewährleisten die genannten Regelungen eine definierte Förderhöhe bei wechselnden Anforderungen an den Heizungswasserdurchsatz. Die Förderhöhe kann bei geregelten Pumpen von vomherein auf ein Minimum eingestellt werden, ohne daß es bei erhöhtem Heizungsbedarf zu einem Leistungseinbruch kommt. Die Förderhöhe ist damit stets optimal an das Heizungssystem angepaßt und eine möglichst hohe Energieersparnis ist gewährleistet. Gleichzeitig werden durch die Druckregelung eventuell auftretende Störgeräusche in den Leitungen und Thermostatventilen reduziert.

Bei der Nachtabsenkung der Kesseltemperatur öffnen die Heizkörperthermostate des Heizungssystems, um die geforderte Raumtemperatur einzustellen. Um den daraus resultierenden erhöhten Mengenbedarf zu decken, reagiert eine geregelte Pumpe mit einer Leistungserhöhung, in extremen Fällen sogar bis an die maximale Leistungsstellgrenze. Solche geregelten Pumpen reagieren also gerade falsch auf die Nachtabsenkung der Kesseltemperatur. Um Energie zu sparen, ist demnach gerade bei geregelten Pumpen eine automatische Anpassung der Pumpenleistung an die Nachtabsenkung wünschenswert.

Die Aufgabe der Erfindung ist es, eine temperaturgeführte Leistungsansteuerung zu schaffen, die kostengünstig und wartungsfreundlich ist und eine energiesparende Leistungsanpassung von Pumpenaggregaten an die gegebenen Bedingungen, d.h. an die veränderliche Heizkesseltemperatur oder an Spitzenlastzeiten, gewährleistet.

Diese Aufgabe wird erfindungsgemäß nach dem kennzeichnenden Teil des Anspruchs 1 gelöst.

Ein Vorteil dieser Leistungsansteuerung ist, daß sie im Wesentlichen mit Temperaturunterschieden also mit relativen Temperaturen arbeitet und die Schaltpunkte anhand von Temperaturverläufen festlegt. Falls Messungen absoluter Temperaturen nötig sind, müssen diese nicht sonderlich genau sein. Für die Messung der Temperaturen können deshalb die einfachsten und billigsten Temperaturfühler verwendet werden, was sich vorteilhaft auf den Verkaufspreis der Pumpenaggregate auswirkt. Die Temperaturfühler (Temperatursensoren) werden vorteilhafterweise schon bei der Fertigung in oder am Pumpenaggregat insbesondere im Gehäuse angebracht, so daß eine gesonderte Montage entfällt.

Dadurch, daß die Pumpe mit der erfindungsgemäßen Kontrolleinheit die Heizkesseltemperatur über den Temperaturverlauf eigenständig verfolgt und die Pumpenleistung auf eine Nachtabsenkung oder eine Sommer/Winter-Umstellung der Heizkesseltemperatur einrichtet, ist eine optimale Energieersparnis gegeben. Fehlschaltungen durch falsche Synchronisation manuell einstellbarer Funktionsmodule sind ausgeschlossen. Die Anpassung der Leistungsstufe der Pumpe erfolgt dabei vorteilhafterweise über eine Leistungssteuerung mit einer Regeleinheit, der eine Leistungsstufe als Regelgröße vorgebbar ist. In einer besonderen Ausführungsform der Erfindung ist die Kontrolleinheit mit einem Prozeßrechner ausgestattet, in den ein Steuerprogramm implementiert ist. Das Programm wird schon bei der Herstellung des Pumpenaggregates in den Speicher des Prozeßrechners geladen. Der Speicher ist vorteilhafterweise ein ROM (read only memory), auf das die Information unveräderbar aufgebracht ist.

In einer besonderen Ausführung weist das Steuerprogramm selbstlemende Algorithmen auf, die unscharf definierte (linguistische) Variablen, insbesondere vorgegebene Schalttemperaturen, während eines Lernprozesses den Bedingungen der Heizungsanlage spezifisch anpassen.

In einer anderen Ausführungsform bedient sich das Steuerprogramm unscharf definierter Schaftkriterien. Eine derartige "fuzzy" Logik befähigt das Pumpenaggregat, den Betriebszustand der Heizungsanlage wie eine Nachtabsenkung oder einen Winterbetrieb selbständig zu erkennen und eine "angepaßte" Leistungsstufe der Pumpe auszuwählen.

Ein mit einem solchen Steuerprogramm bestücktes Pumpenaggregat reagiert autark auf die Nachtabsenkung der Kesseftemperatur oder die Sommer/Winter-Umstellung. Die Umstellung braucht daher nicht durch den Heizungsmonteur zu erfolgen. Damit ist das Pumpenaggregat wartungsarm und kostengünstig im Betrieb. Bei dem erfindungsgemäßen Pumpenaggregat ist die Wahrscheinlichkeit für das Auftreten von Störgeräuschen in den Leitungen im Verhältnis zu gewöhnlichen geregelten Pumpenaggregaten reduziert. Fehleinstellungen des Pumpenaggregates, die eine Unter- oder Überversorgung des Heizungssystems zur Folge haben, werden vermieden. Der Einsatz einer solchen intelligenten Pumpensteuerung bringt damit eine erhebliche Energieerspamis mit sich.

Außerdem ist es vorteilhaft, daß die Regelung so ausgeführt werden kann, daß eine kontinuierliche Sollwertvorgabe zwischen der möglichen minimalen bzw. der maximalen Pumpenleistung ermöglicht wird. Dadurch kann zu Spitzenlastzeiten eine Erhöhung der Pumpenleistung über die zuvor eingestellte Förderhöhe H_{hoch} hinaus erfolgen.

Durch die flexible Anpassung der Leistungsstufe an den Temperaturverlauf ist es möglich, die Temperaturmessung an beliebiger Stelle im Heizungssystem vorzunehmen. Da lediglich relative Temperaturen gemessen werden, ist die Messung nicht mehr wie bisher auf den Vorlauf beschränkt. Um weitere Kontrollkriterien zu haben ist es vorteilhaft, wenn die Kontrolleinheit neben der Temperatur außerdem die Stromaufnahme des Elektromotors oder den Differenzdruck vor und hinter dem Pumpenaggregat registriert und in dem Steuerprogramm verarbeitet. Dadurch ist es auf einfache Weise möglich, den Faktor der Selbsterwärmung des Motors durch stärkere Belastung zu berücksichtigen.

Eine besondere Ausführung der Leistungsansteuerung erkennt darüber hinaus, ob neben der genannten Nachtabsenkung oder Winterumstellung andere Betriebsfälle des Heizungssystems vorliegen, wie beispielsweise eine Niedertemperatur- oder eine Fußbodenheizung. Sie erkennt außerdem, ob das Pumpenaggregat im Vor- oder Rücklauf des Heizungssystems montiert ist, oder ob es sich gerade um eine Spitzenlastzeit handelt, während derer die Förderhöhe eventuell über die vorgegebene Höhe H_{hoch} heraufgesetzt werden muß.

Ein Ausführungsbeispiel der Erfindung und die Funktionsweise ist anhand der Zeichnungen dargestellt und wird im folgenden näher beschrieben.
Es zeigen
- Fig.1: ein Schema eines Heizungskreislaufes
- Fig.2: einen typischen Temperaturverlauf
- Fig.3: einen Verlauf der Parameter des Fallzeitkriteriums
- Fig.4: das Ausgangsverhalten bei einer klassischen Therme.

Das Heizungssystem wird nach Figur 1 von dem Heizkessel 1 mit Wasser der Temperatur T_{Wasser} versorgt. Im Rohrleitungssystem ist ein Pumpenaggregat 2 mit einer Leistungsansteuerung 3 eingebaut, der verschiedene Leistungsstufen und damit verschiedene Förderhöhen H_{hoch} und H_{niedrig} vorgebbar sind.

In dem besonderen Ausführungsbeispiel ist ein geregeltes Pumpenaggregat 2 verwendet, d.h. ein Pumpenaggregat, dessen Leistungsansteuerung 3 eine Regeleinheit 4 aufweist. Einem solchen geregelten Pumpenaggregat 2 ist die Leistungsstufe als Regelgröße vorgebbar. Diese Leistungsstufe wird der Regeleinheit 4 durch eine Kontrolleinheit 6 vorgegeben.

Im Heizungssystem ist ein Temperatursensor 5 möglichst nahe dem Pumpenaggregat 2 bzw. dem Heizwasserrohr angebracht. In dem Ausführungsbeispiel ist der Temperatursensor 5 in das Gehäuse der Pumpe 2 eingebracht. In einer anderen Ausführugsform wird die Temperatur des Heizungssystems über eine beliebige Kommunikationsschnittstelle, beispielsweise von einem im Raum angebrachten Infrarotsensor an eine Infrarotschnittstelle der Kontrolleinheit 6 gesendet.

Die Kontrolleinheit 6, der die Temperatur vom Temperatursensor 5 zugeführt wird, beinhaltet eine Elektronik, die den Verlauf der Temperatur über einen längeren Zeitraum registriert und auswertet. Die Kontrolleinheit 6 ist mit einem Prozeßrechner 7 ausgestattet, in dessen Speicher ein Programm implementiert ist und der einen Analogeingang für das Signal des Temperatursensors 5 aufweist. Stellt die Kontrolleinheit 6 mittels eines noch zu beschreibenden Formalismus fest, daß es sich bei einer Temperaturänderung nicht nur um eine kurzfristige Schwankung, sondern um eine Umstellung der Kesseltemperatur handelt, gibt sie der Leistungsansteuerung eine veränderte Leistungsstufe als neue Regelgröße vor.

Die Vorgabe einer veränderten Leistungsstufe geschieht infolgedessen aufgrund der Änderung der Temperatur relativ zu einer Anfangstemperatur. Es ist daher nicht mehr nötig, absolute Temperaturen zu messen, um sie mit absoluten Schaltwerten zu vergleichen. Das System stellt sich automatisch auf veränderliche Situationen, insbesondere auf eine Nachtabsenkung oder eine Sommer/Winter-Umstellung ein. Die Definition absoluter Schalttemperaturen wird hinfällig. Die Vorgabe der Leistungsstufe des Pumpenaggregates 2 geschieht damit in Abhängigkeit von der zeitlichen Änderung der Temperatur T_{Wasser}. In der zu beschreibenden Ausführungsform der Erfindung ist es jedoch möglich, gemessene absolute Temperaturen als weiteres Bewertungskriterium in den Algorithmus miteinzubeziehen um eine bessere Anpassung an beliebige Heizungssysteme zu gewährleisten.

Die Funktionsweise der Leistungsansteuerung ist in dem Temperatur-Zeit-Diagramm in Figur 2 dargestellt. Es handelt sich dabei um die Aufzeichnung eines realen Temperaturverlaufes der im Vorlauf eines Heizungssystem gemessen wurde. Auf der horizontalen Achse ist die Zeit und auf der vertikalen Achse die Temperatur aufgetragen. Die Teilstriche an der vertikalen Achse markieren Abstände von 5°C.

Der Temperatunrerlauf beginnt bei einer relativ hohen Anfangstemperatur. Nach kurzer Zeit erfolgt die erste Absenkung der Kesseltemperatur, wie an dem starken Temperatursturz zu erkennen ist. An der mit H_{niedrig} markierten Stelle schaltet die Leistungssteuerung die Pumpe auf eine geringere Leistung.

Nach der Phase der Absenkung erhöht der Brenner die Kesseltemperatur. Die Leistungsansteuerung erkennt den markanten Anstieg und reagiert mit der Erhöhung der Pumpenleistung entsprechend der mit H_{hoch} gekennzeichneten Leistung. Aufgrund der speziellen Charakteristik des Temperaturanstieges erkennt die Leistungsansteuerung das Ende der Absenkung schon bevor die Temperatur den Wert erreicht hat, bei der zuvor die Pumpenleistung reduziert wurde.

Nachdem die Kesseltemperatur ihr Maximum erreicht hatte, wurde ein langsamer Temperaturabfall registriert. Dieser Abfall deutet darauf hin, daß sich die Thermostaten an den Heizkörpern schlossen und nur noch eine geringe Menge heißen Wassers gebraucht wurde. Ein solcher Effekt läßt sich beispielsweise durch Sonneneintrahlung erklären. Obwohl die Temperatur die vorher markierte Schwelle unterschreitet, erkennt die Leistungsansteuerung aufgrund der Charakteristik des Verlaufes, daß es sich nicht um eine dauerhafte Senkung der Kesseltemperatur handelt und ändert die Pumpenleistung nicht. Es erfolgt kein Umschalten.

Erst bei der nächsten tatsächlichen Absenkung wird die Pumpenleistung reduziert. Diesmal allerdings bei einer geringeren Temperatur als in der 1. Absenkphase.

In dem Temperaturverlauf sind deutlich die teilweise extremen kurzzeitigen Temperaturschwankungen zu erkennen, auf die die erfindungsgemäße Leistungsansteuerung nicht reagiert, auch wenn eine Schalttemperatur unterschritten wurde.

Ein ähnlicher Temperaturverlauf hätte an einer anderen Stelle des Heizungssystems, beispielsweise im Rücklauf aufgenommen werden können. Die Temperaturänderungen hätten dann bei anderen Absoluttemperaturen stattgefunden, die Leistungsansteuerung hätte aber auf eine ähnliche Weise reagiert.

Im folgenden ist der Formalismus für ein mögliches Steuerprogramm dargestellt. Es handelt sich um einen Fuzzy-Algorithmus mit zwei Eingangsgrößen und den drei Ausgangszuständen Tagbetrieb, Nachtbetrieb und Übergangsbetrieb.

Die erste Eingangsvariable ist die Temperatur an der Oberfläche des Motorgehäuses, die in fünf Bereiche - sehr klein, klein, mittel, hoch und sehr hoch - unterteilt ist. Die Zuweisung von Temperaturwerten zu diesen linguistischen Termen ergibt sich aus definierten Anfangswerten als Preset und dem spezifischen Systemverhaften, indem durch einen adaptiven Parameter a, der je nach Anlage einen Wert zwischen ca. 5 - 10°C hat, die Bereichsgrenzen optimiert werden. Dadurch kann beispielsweise der Temperaturbereich "sehr klein" zwischen 20°C und 25°C liegen. Entsprechend werden auch die Bereiche der übrigen Temperaturklassen adaptiert.

Die zweite Eingangsvariable ist die "Fallzeit". Sie mißt die Zeiträume in denen die Temperatur absinkt. Durch die Fallzeit werden Temperaturänderungen bewertet. Der Algorithmus, nach dem die Fallzeit bestimmt wird, arbeitet nach folgenden Regeln:
- Beim Wechsel von fallender auf ansteigende Temperatur wird eine Variable T_{hoch} angepaßt.
- Beim Wechsel von ansteigender auf fallende Temperatur wird eine Variable T_{niedrig} angepaßt.
- Bei fallender Temperatur wird die Fallzeit inkrementiert.
- Wenn bei steigender Temperatur eine Temperaturdifferenz überschritten wird, wird die Fallzeit zurückgesetzt.

Die Fallzeit (in Minuten), d.h. die Zeitabschnitte nach denen die Temperatur gemessen wird, ist anhand typischer Zeitkonstanten festgelegt und in die drei Bereiche kurz, mittel und lang unterteilt. Der Verlauf der Fallzeit und von T_{hoch} und T_{niedrig} in Abhängigkeit von der gemessenen Temperatur ist in Figur 3 dargestellt. Die obere Kurve zeigt die gemessene Temperatur T, die von den adaptierten Temperaturen T_{hoch} und T_{niedrig} eingehüllt ist. Während der Nachtabsenkung der Temperatur T steigt die Fallzeit, bevor sie beim Anstieg der Temperatur T auf Null zurückgesetzt wird.

Mit T_{hoch} wird außerdem der Korrekturfaktor a für die Adaptierung nach a = (max(min(T_{hoch}-30,40°C), 20°C))/4 berechnet.

Die Regeln für das Fuzzy-System sind die folgenden:
- T = sehr hoch → Tag
- T = sehr klein → Nacht
- T = klein und Fallzeit = kurz → Übergang
- T = klein und Fallzeit = mittel → Übergang
- T = klein und Fallzeit = lang → Nacht
- T = mittel und Fallzeit = kurz → Tag
- T = mittel und Fallzeit = mittel → Übergang
- T = mittel und Fallzeit = lang → Nacht
- T = hoch und Fallzeit = kurz → Tag
- T = hoch und Fallzeit = mittel → Übergang
- T = hoch und Fallzeit = lang → Übergang
Mit den genannten Regeln wird eine Absenkung der Pumpenleistung erreicht, wie sie in Figur 4 dargestellt ist. Es handelt sich bei dem Temperaturverlauf um den einer Therme mit Raumtemperaturregelung. Die Heizkesseltemperatur TH variiert zwischen ca. 20°C und 70°C. Der Bereich der Nachtabsenkung zwischen ca. 22 Uhr und 06 Uhr ist zu erkennen.

Wie die untere Kurve zeigt, ist der Algorithmus in der Lage, den Temperaturverlauf richtig zu deuten und die Pumpenleistung entsprechend der Gegebenheiten anzupassen und schaltet die Leistungsstufe L der Pumpe zwischen ca. 22 Uhr und 06 Uhr zurück Die durch Brennerzyklen verursachten Temperaturschwankungen beeinflussen das Ausgangsverhalten dabei nicht. Die Temperaturschwankungen des Systems werden als solche erkannt und haben keine Auswirkungen auf die Pumpenleistung zur Folge. Gerade solche außerplanmäßigen Temperaturschwankungen führen bei herkömmlichen temperaturgeführten Regelungen zur Umstellung der Pumpenleistung, ohne daß ein Grund wie die Nachtabsenkung der Kesseltemperatur vorliegt.

## Patentansprüche (Patentansprüche für folgende(n) Vertragsstaat(en): DE, FR, GB, IT)

1. Temperaturabhängig geführte Leistungssteuerung (3) für ein elektrisch betriebenes Pumpenaggregat (2) zur Förderung von Heizungswasser in einem Heizungssystem, wobei das Pumpenaggregat mit mindestens zwei verschiedenen Leistungsstufen betreibbar ist, **dadurch gekennzeichnet,**
- **dass** die Leistungssteuerung (2) eine Kontrolleinheit (6) aufweist,
- **dass** die Kontrolleinheit (6) mittels mindestens eines im Heizungssystem befindlichen Temperatursensors (5) den Temperaturverlauf des Heizungswassers durch Messung der Temperatur und der Zeiträume, in denen die Temperatur absinkt, registriert und
- **dass** die Kontrolleinheit (6) der Leistungssteuerung (3) eine von der registrierten Temperatur und der Temperaturverlaufscharakteristik abhängige Leistungsstufe vorgibt.

2. Leistungsansteuerung nach Anspruch 1,
**dadurch gekennzeichnet, daß** der
Temperatursensor (5) in oder an dem Pumpenaggregat (2) angebracht ist.

3. Leistungsansteuerung nach Anspruch 1 oder 2,
**dadurch gekennzeichnet, daß** die
Kontrolleinheit (6) aus dem registrierten Temperaturverlauf eine Nachtabsenkung oder eine Sommer/Winter-Umstellung der Kesseltemperatur erkennt und der Leistungssteuerung (3) eine entsprechend geringere Leistungsstufe vorgibt.

4. Leistungsansteuerung nach Anspruch 1 oder 2,
**dadurch gekennzeichnet, daß** die
Leistungssteuerung (3) eine Regeleinheit (4) aufweist, der als Regelgröße eine Leistungsstufe vorgebbar ist.

5. Leistungsansteuerung nach einem der genannten Ansprüche, **dadurch gekennzeichnet, daß** die Kontrolleinheit (6) der Regeleinheit (4) eine vom registrierten Temperaturverlauf abhängige Leistungsstufe als Regelgröße vorgibt.

6. Leistungsansteuerung nach einem der genannten Ansprüche, **dadurch gekennzeichnet, daß** die Kontrolleinheit (6) aus dem registrierten Temperaturverlauf eine Nachtabsenkung oder eine Sommer/Winter-Umstellung der Kesseltemperatur erkennt und der Regeleinheit (4) eine entsprechend geringere Leistungsstufe vorgibt.

7. Leistungsansteuerung nach einem der genannten Ansprüche, **dadurch gekennzeichnet, daß** die Kontrolleinheit (6) mit einem Prozeßrechner (7) ausgestattet ist.

8. Leistungsansteuerung nach Anspruch 7, **dadurch gekennzeichnet, daß** dem Prozeßrechner (7) ein Steuerprogramm implementiert ist, das die Leistungsstufe in Abhängigkeit vom Temperaturverlauf vorgibt.

9. Leistungsansteuerung nach Anspruch 8, **dadurch gekennzeichnet, daß** das Steuerprogramm selbstlernende Algorithmen aufweist.

10. Leistungsansteuerung nach Anspruch 8 oder 9, **dadurch gekennzeichnet, daß** das Steuerprogramm Algorithmen mit unscharfen Bedingungen, insbesondere eine Fuzzy Logik, aufweist.

11. Leistungsansteuerung nach einem der genannten Ansprüche, **dadurch gekennzeichnet, daß** die Kontrolleinheit (6) die Stromaufnahme und/oder den Differenzdruck registriert.

12. Leistungsansteuerung nach einem der genannten Ansprüche, **dadurch gekennzeichnet, daß** die Kontrolleinheit (6) auch andere Betriebsfälle der Pumpe, wie eine Niedertemperatur- oder Fußbodenheizung, eine Montage im Vor- oder Rücklauf oder Spitzenlastzeiten selbständig erkennt.

13. Leistungsansteuerüng nach einem der genannten Ansprüche, **dadurch gekennzeichnet, daß** die Temperatur des Heizungssystems an beliebiger Stelle gemessen und die Temperaturwerte der Kontrolleinheit (6) übermittelt werden.

## Patentansprüche (Patentansprüche für folgende(n) Vertragsstaat(en): NL)

1. Temperaturabhängig geführte Leistungssteuerung (3) für ein elektrisch betriebenes Pumpenaggregat (2) zur Förderung von Heizungswasser in einem Heizungssystem, wobei das Pumpenaggregat mit mindestens zwei verschiedenen Leistungsstufen betreibbar ist, **dadurch gekennzeichnet,**
- **dass** die Leistungssteuerung (2) eine Kontrolleinheit (6) aufweist,
- **dass** die Kontrolleinheit (6) mittels mindestens eines im Heizungssystem befindlichen Temperatursensors (5) den Temperaturverlauf des Heizungswassers durch Messung der Temperatur und der Zeiträume, in denen die Temperatur absinkt, registriert und
- **dass** die Kontrolleinheit (6) der Leistungssteuerung (3) eine von der registrierten Temperaturverlaufscharakteristik abhängige Leistungsstufe vorgibt.

2. Leistungsansteuerung nach Anspruch 1,
**dadurch gekennzeichnet, daß** der
Temperatursensor (5) in oder an dem Pumpenaggregat (2) angebracht ist.

3. Leistungsansteuerung nach Anspruch 1 oder 2,
**dadurch gekennzeichnet, daß** die
Kontrolleinheit (6) aus dem registrierten Temperaturverlauf eine Nachtabsenkung oder eine Sommer/Winter-Umstellung der Kesseltemperatur erkennt und der Leistungssteuerung (3) eine entsprechend geringere Leistungsstufe vorgibt.

4. Leistungsansteuerung nach Anspruch 1 oder 2,
**dadurch gekennzeichnet, daß** die
Leistungssteuerung (3) eine Regeleinheit (4) aufweist, der als Regelgröße eine Leistungsstufe vorgebbar ist.

5. Leistungsansteuerung nach einem der genannten Ansprüche, **dadurch gekennzeichnet, daß** die Kontrolleinheit (6) der Regeleinheit (4) eine vom registrierten Temperaturverlauf abhängige Leistungsstufe als Regelgröße vorgibt.

6. Leistungsansteuerung nach einem der genannten Ansprüche, **dadurch gekennzeichnet, daß** die Kontrolleinheit (6) aus dem registrierten Temperaturverlauf eine Nachtabsenkung oder eine Sommer/Winter-Umstellung der Kesseltemperatur erkennt und der Regeleinheit (4) eine entsprechend geringere Leistungsstufe vorgibt.

7. Leistungsansteuerung nach einem der genannten Ansprüche, **dadurch gekennzeichnet, daß** die Kontrolleinheit (6) mit einem Prozeßrechner (7) ausgestattet ist.

8. Leistungsansteuerung nach Anspruch 7, **dadurch gekennzeichnet, daß** dem Prozeßrechner (7) ein Steuerprogramm implementiert ist, das die Leistungsstufe in Abhängigkeit vom Temperaturverlauf vorgibt.

9. Leistungsansteuerung nach Anspruch 8, **dadurch gekennzeichnet, daß** das Steuerprogramm selbstlernende Algorithmen aufweist.

10. Leistungsansteuerung nach Anspruch 8 oder 9, **dadurch gekennzeichnet, daß** das Steuerprogramm Algorithmen mit unscharfen Bedingungen, insbesondere eine Fuzzy Logik, aufweist.

11. Leistungsansteuerung nach einem der genannten Ansprüche, **dadurch gekennzeichnet, daß** die Kontrolleinheit (6) die Stromaufnahme und/oder den Differenzdruck registriert.

12. Leistungsansteuerung nach einem der genannten Ansprüche, **dadurch gekennzeichnet, daß** die Kontrolleinheit (6) auch andere Betriebsfälle der Pumpe, wie eine Niedertemperatur- oder Fußbodenheizung, eine Montage im Vor- oder Rücklauf oder Spitzenlastzeiten selbständig erkennt.

13. Leistungsansteuerung nach einem der genannten Ansprüche, **dadurch gekennzeichnet, daß** die Temperatur des Heizungssystems an beliebiger Stelle gemessen und die Temperaturwerte der Kontrolleinheit (6) übermittelt werden.

## Claims (Claims for the following Contracting State(s): DE, FR, GB, IT)

1. A temperature responsive power control system (3) for an electric pump unit (2) for supplying heating water in a heating system, wherein the pump unit can be operated with a least two different power stages,
**characterised in that**
- the power control system (2) has a control unit (6),
- the control unit (6) records the course of temperature of the heating of water by means of at least one temperature sensor (5) present in the heating system by measuring the temperature and the periods, in which the temperature drops and
- the control unit (6) of the power control system (3) presets a power stage depending on the recorded temperature and the characteristics of the course of temperature.

2. A power control according to claim 1,
**characterised in that** the temperature sensor (5) is disposed in or on the pump unit (2).

3. A power control according to claims 1 or 2,
**characterised in that** the control unit (6) detects a night-time reduction or a summer/winter changeover of the boiler temperature based on the recorded course of temperature and presets a correspondingly lower power stage for the power control system (3).

4. A power control according to claims 1 or 2, **characterised in that** the power control system (3) has a control unit (4), for which a power stage can be preset as a controlled variable.

5. A power control according to one of the claims stated, **characterised in that** the control unit (6) presets a power stage depending on the recorded course of temperature as a control variable for the control unit (4).

6. A power control according to one of the claims stated, **characterised in that** the control unit (6) detects a night-time reduction or a summer/winter changeover of the boiler temperature based on the recorded temperature and presets a correspondingly lower power stage for the control unit (4).

7. A power control according to one of the claims stated, **characterised in that** the control unit (6) is equipped with a process computer (7).

8. A power control according to claim 7, **characterised in that** in the process computer (7) a control program is implemented, which presets the power stage depending on the course of temperature.

9. A power control according to claim 8, **characterised in that** the control program has self-learning algorithms.

10. A power control according to claims 8 or 9 **characterised in that** the control program has algorithms with imprecise conditions, more particularly a fuzzy logic system.

11. A power control according to one of the claims stated, **characterised in that** the control unit (6) records power consumption and/or differential pressure.

12. A power control according to one of the claims stated, **characterised in that** the control unit (6) also independently detects other operating conditions of the pump, such as low temperature heating or floor heating, mounting in the outflow or return flow or peak load times.

13. A power control according to one of the claims stated, **characterised in that** the temperature of the heating system is measured at any location and the temperature values are transmitted to the control unit (6).

## Claims (Claims for the following Contracting State(s): NL)

1. A temperature responsive power control system (3) for an electric pump unit (2) for supplying heating water in a heating system, wherein the pump unit can be operated with a least two different power stages,
**characterised in that**
- the power control system (2) has a control unit (6),
- the control unit (6) records the course of temperature of the heating of water by means of at least one temperature sensor (5) present in the heating system by measuring the temperature and the periods, in which the temperature drops and
- the control unit (6) of the power control system (3) presets a power stage depending on the recorded characteristics of the course of temperature.

2. A power control according to claim 1,
**characterised in that** the temperature sensor (5) is disposed in or on the pump unit (2).

3. A power control according to claims 1 or 2,
**characterised in that** the control unit (6) detects a night-time reduction or a summer/winter changeover of the boiler temperature based on the recorded course of temperature and presets a correspondingly lower power stage for the power control system (3).

4. A power control according to claims 1 or 2, **characterised in that** the power control system (3) has a control unit (4), for which a power stage can be preset as a controlled variable.

5. A power control according to one of the claims stated, **characterised in that** the control unit (6) presets a power stage depending on the recorded course of temperature as a control variable for the control unit (4).

6. A power control according to one of the claims stated, **characterised in that** the control unit (6) detects a night-time reduction or a summer/winter changeover of the boiler temperature based on the recorded temperature and presets a correspondingly lower power stage for the control unit (4).

7. A power control according to one of the claims stated, **characterised in that** the control unit (6) is equipped with a process computer (7).

8. A power control according to claim 7, **characterised in that** in the process computer (7) a control program is implemented, which presets the power stage depending on the course of temperature.

9. A power control according to claim 8, **characterised in that** the control program has self-learning algorithms.

10. A power control according to claims 8 or 9 **characterised in that** the control program has algorithms with imprecise conditions, more particularly a fuzzy logic system.

11. A power control according to one of the claims stated, **characterised in that** the control unit (6) records power consumption and/or differential pressure.

12. A power control according to one of the claims stated, **characterised in that** the control unit (6) also independently detects other operating conditions of the pump, such as low temperature heating or floor heating, mounting in the outflow or return flow or peak load times.

13. A power control according to one of the claims stated, **characterised in that** the temperature of the heating system is measured at any location and the temperature values are transmitted to the control unit (6).

## Revendications (Revendications pour l'(les) Etat(s) contractant(s) suivant(s): DE, FR, GB, IT)

1. Commande de puissance (3) commandée en fonction de la température pour un groupe de pompes (2) entraîné électriquement pour le refoulement d'eau de chauffage dans un système de chauffage, le groupe de pompes pouvant être conduit avec au moins deux étages de puissance différents,
**caractérisée en ce**
- **que** la commande de puissance (6) présente une unité de contrôle (6),
- **que** l'unité de contrôle (6) enregistre la variation dans le temps de la température de l'eau de chauffage par la mesure de la température et de l'intervalle de temps, dans lesquels la température baisse au moyen d'un moins un capteur de température (5) se trouvant dans le système de chauffage et
- **que** l'unité de contrôle (6) de la commande de puissance (3) prédéfinit un étage de puissance dépendant, de la caractéristique de variation dans le temps et de la température enregistrée.

2. Commande de puissance selon la revendication 1,
**caractérisée en ce que** le capteur de température (5) est monté dans ou sur le groupe de pompes (2).

3. Commande de puissance selon la revendication 1 ou 2,
**caractérisée en ce que** l'unité de contrôle (6) reconnaît, à partir de la variation dans le temps de la température enregistrée, un abaissement de nuit ou un changement été/hiver de la température de chaudière et prédéfinit à la commande de puissance (3) un étage de puissance plus faible en correspondance.

4. Commande de puissance selon la revendication 1 ou 2,
**caractérisée en ce que** la commande de puissance (3) présente une unité de réglage (4) à laquelle un étage de puissance peut être prédéfini en tant que variable commandée.

5. Commande de puissance selon l'une des revendications citées,
**caractérisée en ce que** l'unité de contrôle (6) prédéfinit à l'unité de réglage (4) un étage de puissance dépendant de la variation dans le temps de la température enregistrée en tant que variable commandée.

6. Commande de puissance selon l'une des revendications citées,
**caractérisée en ce que** l'unité de contrôle (6) reconnaît, à partir de la variation dans le temps de la température enregistrée, un abaissement de nuit ou un changement été/hiver de la température de chaudière et prédéfinit à l'unité de réglage un étage de puissance plus faible en correspondance.

7. Commande de puissance selon l'une des revendications citées,
**caractérisée en ce que** l'unité de contrôle (6) est équipée d'un calculateur industriel (7).

8. Commande de puissance selon la revendication 7,
**caractérisée en ce qu'**un programme de commande est implémenté dans le calculateur industriel (7) et prédéfinit l'étage de puissance en dépendance de la variation dans le temps de la température.

9. Commande de puissance selon la revendication 8,
**caractérisée en ce que** le programme de commande présente des algorithmes autodidactiques.

10. Commande de puissance selon la revendication 8 ou 9,
**caractérisée en ce que** le programme de commande présente des algorithmes à conditions floues en particulier une logique lâche.

11. Commande de puissance selon l'une des revendications citées,
**caractérisée en ce que** l'unité de contrôle (6) enregistre la consommation de courant et/ou la pression différentielle.

12. Commande de puissance selon l'une des revendications citées,
**caractérisée en ce que** l'unité de contrôle (6) reconnaît automatiquement également d'autres cas de fonctionnement de la pompe, tels qu'un chauffage basse température ou de plancher, un montage dans l'aller ou dans le retour ou des temps de charge de pointe.

13. Commande de puissance selon l'une des revendications citées,
**caractérisée en ce que** la température du système de chauffage est mesurée à des emplacements quelconques et les valeurs de température sont transmises à l'unité de contrôle (6).

## Revendications (Revendications pour l'(les) Etat(s) contractant(s) suivant(s): NL)

1. Commande de puissance (3) commandée en fonction de la température pour un groupe de pompes (2) entraîné électriquement pour le refoulement d'eau de chauffage dans un système de chauffage, le groupe de pompes pouvant être conduit avec au moins deux étages de puissance différents,
**caractérisée en ce**
- **que** la commande de puissance (6) présente une unité de contrôle (6),
- **que** l'unité de contrôle (6) enregistre la variation dans le temps de la température de l'eau de chauffage par la mesure de la température et de l'intervalle de temps, dans lesquels la température baisse au moyen d'un moins un capteur de température (5) se trouvant dans le système de chauffage et
- **que** l'unité de contrôle (6) de la commande de puissance (3) prédéfinit un étage de puissance dépendant, de la caractéristique de variation dans le temps enregistrée.

2. Commande de puissance selon la revendication 1,
**caractérisée en ce que** le capteur de température (5) est monté dans ou sur le groupe de pompes (2).

3. Commande de puissance selon la revendication 1 ou 2,
**caractérisée en ce que** l'unité de contrôle (6) reconnaît, à partir de la variation dans le temps de la température enregistrée, un abaissement de nuit ou un changement été/hiver de la température de chaudière et prédéfinit à la commande de puissance (3) un étage de puissance plus faible en correspondance.

4. Commande de puissance selon la revendication 1 ou 2,
**caractérisée en ce que** la commande de puissance (3) présente une unité de réglage (4) à laquelle un étage de puissance peut être prédéfini en tant que variable commandée.

5. Commande de puissance selon l'une des revendications citées,
**caractérisée en ce que** l'unité de contrôle (6) prédéfinit à l'unité de réglage (4) un étage de puissance dépendant de la variation dans le temps de la température enregistrée en tant que variable commandée.

6. Commande de puissance selon l'une des revendications citées,
**caractérisée en ce que** l'unité de contrôle (6) reconnaît, à partir de la variation dans le temps de la température enregistrée, un abaissement de nuit ou un changement été/hiver de la température de chaudière et prédéfinit à l'unité de réglage un étage de puissance plus faible en correspondance.

7. Commande de puissance selon l'une des revendications citées,
**caractérisée en ce que** l'unité de contrôle (6) est équipée d'un calculateur industriel (7).

8. Commande de puissance selon la revendication 7,
**caractérisée en ce qu'**un programme de commande est implémenté dans le calculateur industriel (7) et prédéfinit l'étage de puissance en dépendance de la variation dans le temps de la température.

9. Commande de puissance selon la revendication 8,
**caractérisée en ce que** le programme de commande présente des algorithmes autodidactiques.

10. Commande de puissance selon la revendication 8 ou 9,
**caractérisée en ce que** le programme de commande présente des algorithmes à conditions floues en particulier une logique lâche.

11. Commande de puissance selon l'une des revendications citées,
**caractérisée en ce que** l'unité de contrôle (6) enregistre la consommation de courant et/ou la pression différentielle.

12. Commande de puissance selon l'une des revendications citées,
**caractérisée en ce que** l'unité de contrôle (6) reconnaît automatiquement également d'autres cas de fonctionnement de la pompe, tels qu'un chauffage basse température ou de plancher, un montage dans l'aller ou dans le retour ou des temps de charge de pointe.

13. Commande de puissance selon l'une des revendications citées,
**caractérisée en ce que** la température du système de chauffage est mesurée à des emplacements quelconques et les valeurs de température sont transmises à l'unité de contrôle (6).
